# EUROPEAN PATENT SPECIFICATION

(11) **EP 1 459 431 B1**
(45) Date of publication and mention of the grant of the patent: **02.11.2005**
(21) Application number: 02785820.8
(22) Date of filing: 03.12.2002
(51) Int. Cl.: H02M 3/335

(54) **FLYBACK POWER CONVERTER**
SPERRLEISTUNGSWANDLER
CONVERTISSEUR DE PUISSANCE A TRANSFERT INDIRECT

(30) Priority: 14.12.2001 US 17346
(43) Date of publication of application: 22.09.2004
(73) Proprietor: Koninklijke Philips Electronics N.V., 5621 BA Eindhoven (NL)
(72) Inventor: GIANNOPOULOS, Demetri, J., NL-5656 AA Eindhoven (NL)
(74) Representative: Groenendaal, Antonius W. M.
(86) International application number: PCT/IB2002/005124
(87) International publication number: WO 2003/052913

(56) References cited:
- EP-A- 0 698 959
- EP-A- 0 772 284
- US-A- 5 617 015
- PATENT ABSTRACTS OF JAPAN vol. 1997, no. 09, 30 September 1997 (1997-09-30) & JP 09 140131 A (YOKOGAWA ELECTRIC CORP), 27 May 1997 (1997-05-27)

## Description

### BACKGROUND OF THE INVENTION

### Technical Field of the Invention

The present invention relates in general, to power conversion and, more specifically, to a multiple output flyback converter.

### Description of the Related Art

Power converters are widely used to provide required voltages and load currents especially in environments that have higher concentrations of telecommunications or computer equipment. These power converters are often required to provide higher levels of output power for a small physical volume, since space is often at a premium. This requirement dictates that the power converters be high power density devices. These higher power density concentrations also dictate that the power converter operate with as high an efficiency as possible to minimize the converter's heat generation and therefore its operating temperature rise to the degree possible.

Through the use of switching regulator techniques, power converter efficiencies may be achieved that are typically higher than those of linear regulation techniques. These switching regulator techniques, however, give rise to other efficiency-decreasing problems that are not typically encountered in linear regulators. Because of higher switching frequencies (50 to 100 kilohertz), parasitic circuit inductance and capacitance elements in the transformers and switching devices cause "ringing" due to circuit resonance. This ringing typically presents both device and efficiency problems that must be addressed to operate the converters at high power densities.

One prior-art method for increasing power density of dc-to-dc converters, particularly in applications where more than one output voltage is required, is to use a single power stage with multiple windings on the power transformer, one for each output voltage. In such a converter, all outputs share the same inverter stage, and only one output, called the main output, is fully regulated by pulse-width modulation of the inverter switches on the primary side. Such a solution then requires feedback isolation, and additional post-regulators are required for independent regulation of the auxiliary outputs against load variation.

The flyback converter is a very popular power supply topology for use in low-power, multiple output applications. When the main output voltage regulation requirement is moderate, these converters may be operated with the main output being regulated by the switching regulator and the other output (s) being "cross-regulated", i.e., the ratio of the output voltages on the different windings is determined by the winding ratio and the actual relative voltage levels are determined by the 'on' time of the main switch. Cross-regulation of each output voltage is achieved by the turns ratio of the secondary windings.

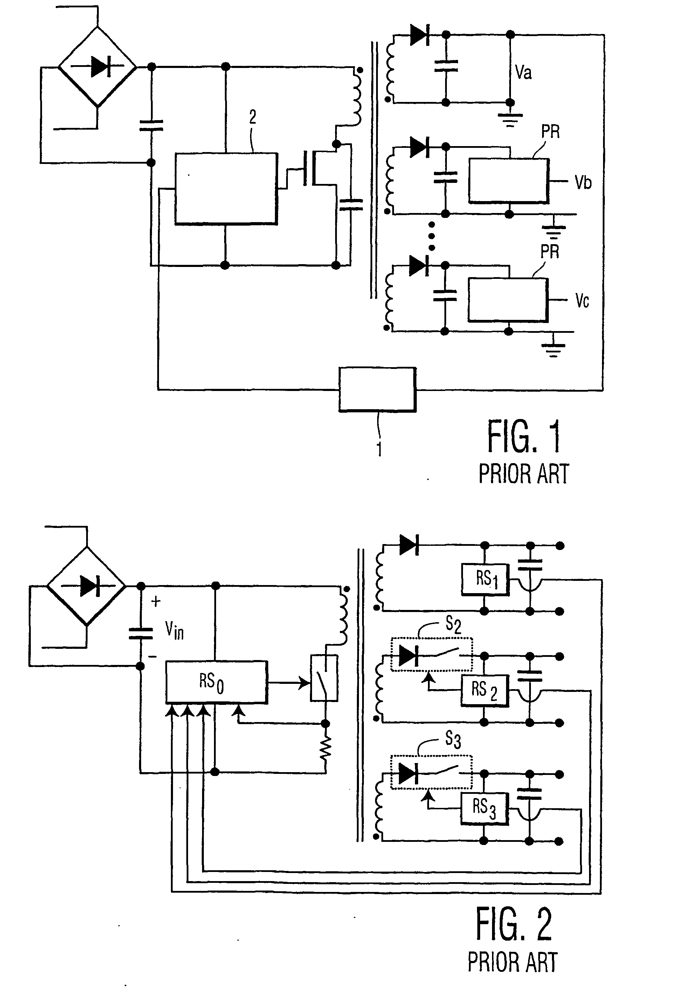

FIG. 1 illustrates a prior art flyback converter that uses a single switch on the primary side of the transformer to directly regulate one of the output voltage, i.e., Va, using feedback control via a mains-isolation unit 1 to a power-supply controller 2. The cross-regulation of the other output voltages, i.e., Vb and Vc, is achieved by the turns ratio of the secondary winding. A drawback of the flyback converter of FIG. 1 is the presence of parasitics which result in wide tolerances for the cross-regulated outputs, which do not satisfy strict regulation requirements. Post-regulators PR (e.g., linear regulators) are sometimes used to improve the regulation of the output voltages. However, this approach increases cost and reduces efficiency of the power supply.

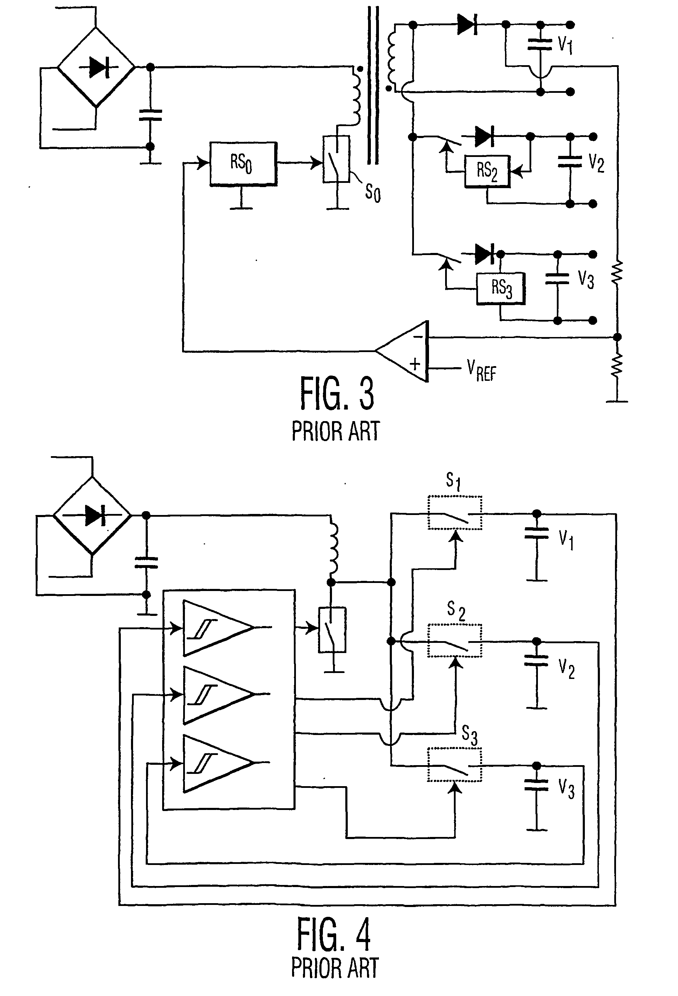

European patent No. 0 698 959 discloses one secondary-side control method which includes switches on the secondary-side of the transformer to provide independently regulated outputs. FIG. 2 illustrates a flyback converter where a rectifying diode is connected in series with each secondary winding. The corresponding regulator RS₁ of the first output circuit controls the regulator RS₀ of the primary-side circuit. Output regulators RS₂, RS₃, control the respective secondary-side switches S₂, S₃. The input DC voltage Vᵢₙ, a signal derived from a current through the primary-side switch S₀ and one output of the regulators RS₂, RS₃ are also fed to the primary-side regulator RS₀.

EP 0 772 284 discloses another secondary-side control method where one secondary winding supplies multiple output voltages via separate branches as shown in FIG. 3. Each output voltage is rectified by means of a diode. The first output voltage V₁ is regulated by the pulse width of the primary-side switch S₀ via regulator RS₀. A switch is inserted into each branch supplying the remaining output voltages (V₂, V₃). Regulators RS₂, RS₃ sense the respective remaining output voltages V₂, V₃. The regulators RS₂, RS₃ control the duty cycle of the corresponding switch to regulate the output voltage.

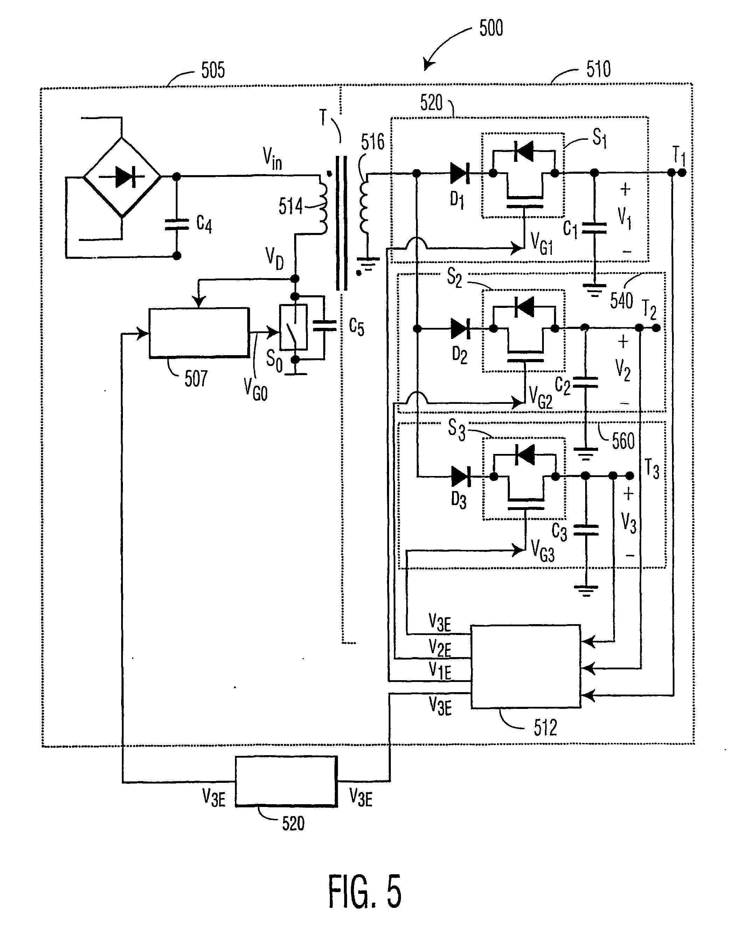

U.S. Patent 5,617,015 to Goder et al., discloses a voltage regulator providing multiple independently regulated outputs. FIG. 4 illustrates a boost topology circuit configuration disclosed in Goder. However, it is disclosed that the voltage regulator may be implemented with a flyback or other topologies. A dedicated switch to each output voltage controls the energy delivery to the output. Energy is delivered to only those outputs that have fallen below the lower limit of an acceptable range. The voltage regulator will stop supplying the outputs that have exceeded the upper limit of an acceptable range.

European patents Nos. 0 698 959 and 0 772 284 and U.S. Patent 5,617,015 to Goder each recite control of the on/off state of the primary-side switch based on the values of the output voltages. While each resolve the problem of primary side control of one of the outputs, they share a common drawback. Specifically, the secondary side control methods disclosed by each result in hard switching of the primary-side switch thus increasing switching losses and thereby reducing the efficiency of the power converter.

A further drawback associated with the circuits of FIG. 2 and 3 is that one of the output voltages has no secondary-side switch dedicated to its regulation. Instead, the output includes a rectifying diode and is regulated by the primary side switch. This is problematic in reduced power modes of operation (e.g., standby) where it is desirable to disable some of the outputs. This cannot be achieved with the circuit configurations of FIGS. 2 and 3 because the output which does not include the secondary-side switch cannot be disabled without disabling all of the outputs.

A still further drawback associated with the circuit of FIG. 4 is that the regulation method described therein increases the peak output current resulting in increased ripple compared with methods that continuously provide current to the multiple outputs.

JP-A-09140131 discloses a flyback-type converter in which a DC voltage applied to a primary winding of a transformer is turned on/off by a switching device. A switching signal induced in a secondary winding of the transformer is rectified and smoothed to generate a main output voltage. Further, a zero-voltage detection unit outputs a trigger signal at the instant of the lowest value of a resonance voltage at the switching device. The resonance voltage at the switching device occurs due to the output parasitic capacitance of the switching device and the inductance of the transformer. By switching on the switching device at the instant of the lowest value of a resonance voltage the switching loss is reduced.

### SUMMARY OF THE INVENTION

It is an object of the invention to provide a power converter which has an improved efficiency.

The invention is defined by the independent claims. The dependent claims define advantageous embodiments.

The object is realized in that a primary side controller is present to turn on the power switch substantially at a moment when a drain voltage across the power switch reaches a resonance minimum as result of winding and the switch capacitor.

By turning on the power switch during a minimum of the drain voltage, the turn on losses are reduced. This minimum may be chosen to be approximately zero volts, so as to minimize the losses by so-called zero-volt switching. The features of the invention allow applying the turning on with minimum losses to a power converter with multiple outputs, thereby achieving a level of circuit efficiency and flexibility not available in prior art circuit constructions.

The novel converter provides circuit efficiency by providing zero-volt switching of the primary side switch. Zero-volt switching is achieved by taking advantage of a resonance which occurs between a switch capacitor coupled in parallel with a primary side power switch and a magnetization inductance of a primary side winding. A primary side controller detects the resonance condition and switches the power switch at one of the resonant waveform minima.

The novel converter further provides flexibility via secondary-side regulation. In particular, the converter provides means for independently and selectively disabling one or more output channels of the converter by providing a secondary side switch in each of a plurality of output circuits. An output circuit or channel can be selectively disabled, via the switch, by blocking the secondary winding current from flowing into the selected output.

In an embodiment to be illustrated and described, the isolation power converter is a flyback isolation converter including a power transformer, a power switch on the primary side and a secondary side including three output channels connected to a single secondary winding. Each of the output channels comprises a switch. The switches are turned on sequentially in an energy cycle for supplying the required amount of energy to the respective output channels. The first two output channels switched in each energy cycle are regulated on the secondary side and the last output channel to be switched in each energy cycle is controlled from the primary side. Primary-side control of the last output to be switched in the sequence is effected by a feedback signal which is transmitted from the secondary-side, via an opto-coupler, to a pulse-width modulator on the primary side for controlling the duty cycle of the power switch on the primary side. While separate voltage controlled switches are included in each output channel, the switch associated with the final output channel to be sequenced is subsidiary to the primary side power switch. However, separate switches are included in each output channel to selectively disable one or more of the output channels by blocking the secondary winding current from flowing into the disabled output(s).

In an embodiment to be illustrated and described, the primary and secondary side switches are metal oxide semiconductor field-effect transistor switches (MOSFETs). Those skilled in the pertinent art will understand, however, that the present invention fully encompasses all controllable switches, whether conventional or later-developed. An external diode may be employed as required to supplement an internal body diode of the clamping switch. Of course, an external diode may also be employed if the clamping switch does not include a body diode.

In one embodiment of the present invention, the converter is selected from the group consisting of a flyback converter, a forward converter and a half-bridge converter. Those skilled in the pertinent art understand, however, that other isolated converter topologies are well within the broad scope of the present invention.

### BRIEF DESCRIPTION OF THE DRAWINGS

The foregoing features of the present invention will become more readily apparent and may be understood by referring to the following detailed description of an illustrative embodiment of the present invention, taken in conjunction with the accompanying drawings, where:
FIG. 1 is a circuit diagram illustrating a conventional flyback converter that uses a single switch on the primary side of the transformer to directly regulate one of the output voltages;
FIG. 2 is a circuit diagram illustrating a conventional flyback converter which illustrates one secondary-side control method according to the prior art;
FIG. 3 is a circuit diagram illustrating a conventional flyback converter which illustrates another secondary-side control method according to the prior art;
FIG.4 is a circuit diagram illustrating a dedicated switch in each output according to the prior art;
FIG. 5 illustrates a circuit diagram of a soft-switching multiple-output flyback converter in accordance with the present invention; and
FIG. 6 illustrates idealized waveforms during a switching period of the soft-switched multiple-output flyback converter of FIG. 5.

### DETAILED DESCRIPTION OF PREFERRED EMBODIMENTS

Referring to FIG. 5, a schematic diagram of an exemplary embodiment of a flyback converter circuit according to the invention is illustrated, and is generally identified by the numeral 500. Converter 500 includes a primary circuit 505, a regulated output circuit 510 and an opto-coupler 520. Opto-coupler 520 operates to optically couple feedback information from the mains isolated regulated output circuit 510 to the non-mains isolated primary circuit 505. The primary circuit 505, includes a primary winding 514 of a transformer T coupled to a power switch S₀, an input capacitor C₄ connected across a first and second input supply nodes across which a rectified input voltage Vᵢₙ is present and a primary-side controller 507. The primary-side controller 507 controls the switch S₀ via a gate V_{GO}, being the control terminal of the power switch S₀. Parallel to the power switch S₀ a switch capacitor C₅ is connected. When the power switch S₀ conducts, a transformer current flows through the primary winding 514 and stores energy in the magnetic field of the transformer T. When the power switch is non-conductive, the energy stored in the magnetic field is transferred to the secondary winding 516 to develop two or more DC output voltages.

The regulated output circuit 510, coupled to the mains isolated part of the transformer T via the secondary winding 516, includes three output channels in the exemplary embodiment. A first output channel 520 is coupled between the secondary winding 516 of the transformer T and a first output terminal T₁. The first channel includes a diode D₁, a switch S₁ and a capacitor C₁. A second output channel 540 is coupled between the secondary winding 516 of the transformer T and a second output terminal T₂. The second channel includes a diode D₂, a switch S₂ and a capacitor C₂. A third output channel 560 is coupled between the secondary winding 516 of the transformer T and a third output terminal T₃. The third output includes a diode D₃, a switch S₃ and a capacitor C₃. Capacitors C₁, C₂ and C₃ are coupled between the respective output terminals T₁, T₂, T₃ to a reference voltage, for example a common ground level, to stabilize the output voltages V₁, V₂, V₃ across the respective capacitors C₁, C₂, C₃ by absorbing high frequency ripple current. Diodes D₁, D₂ and D₃ prevent that current flows back into the secondary winding. Preferably, each of switches S₁, S₂ and S₃ comprise a MOSFET, the anti-parallel rectifier comprising a body diode of the MOSFET. Of course, other types of switches, including bipolar junction transistors (BJTs), are well within the broad scope of the present invention.

Drive control for switches S₁, S₂ and S₃ is provided by a secondary-side controller 512 which receives as input signals, the output voltages V₁, V₂ and V₃ and processes the respective input signals to generate corresponding feedback signals V_{1E}, V_{2E} and V_{3E} in the form of pulse width modulated signals for driving the gates V_{G1}, V_{G2}, V_{G3} of respective switches S₁, S₂ and S₃ to maintain regulated output voltages V₁, V₂, V₃. In the embodiment further described herein below, the switches S₁, S₂, S₃ are turned on sequentially.

The regulation scheme shown in FIG. 5 is commonly called secondary side regulation because switches are used on the secondary side of the transformer to regulate the output voltages V₁, V₂, V₃.

The power converter 500 further includes a primary-side controller 507. The primary-side controller 507 performs two essential functions to effect zero-voltage switching of the power switch S₀. First, the controller 507 monitors the drain voltage V_{D} of power switch S₀ to turn on the power switch S₀ at a voltage minimum of the drain voltage V_{D} waveform. Second, at the point in time at which the power switch S₀ is turned on, the controller 507 utilizes the secondary side feedback signal corresponding to the output channel of which the switch is turned on as last in the sequence in the energy cycle, to adjust the duty cycle of the primary side power switch S₀.

In the exemplary circuit of FIG. 5, the output channels are sequenced in the following first to last order: output channel 520, 540 and 560. Accordingly, the feedback signal V_{3E} corresponding to the third output channel 560 is continuously fed back from the secondary-side controller 512, via the opto-coupler 520, to the primary-side controller 507 to adjust the duty cycle of the power switch S₀ by controlling a point in time when the power switch S₀ is turned on.

Further, it will be apparent to one of ordinary skill in the art that the circuit of the present invention could have a different number of output circuits than that shown in the exemplary circuit of FIG. 5 without altering the basic circuit principles and mode of operation.

### Circuit Operation

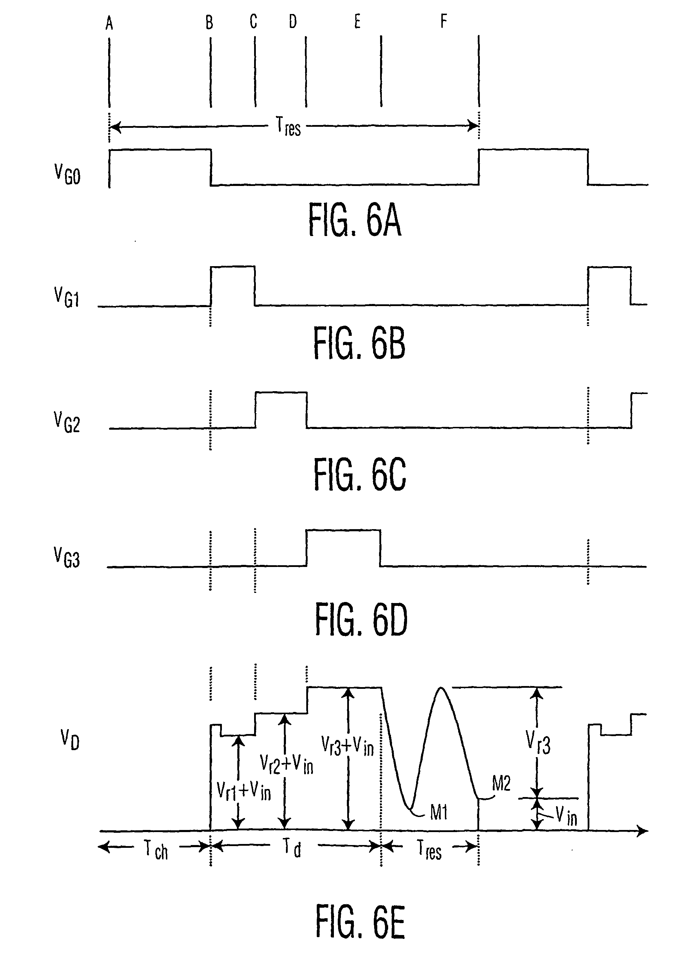

Operation of the converter 500 of FIG. 5 may be more readily understood with reference to the idealized switching circuit waveforms of FIG. 6 for one charge/discharge cycle as defined by the time interval Tₚₑᵣ from point A to F. FIGS. 6a-d illustrate the open and closed states of the power switch S₀ and the switches S₁, S₂ and S₃ during the charge/discharge cycle by showing the voltages at the respective gates V_{GO}, V_{G1}, V_{G2}, V_{G3}. FIG. 6e illustrates the drain voltage V_{D} of the power switch S₀ for this time interval. When the power switch S₀ is turned on, the circuit is in the charging phase of the cycle, while when the switches S₁, S₂, S₃ are turned on, the circuit is in the discharge phase.

### Charging Phase

During the charge phase of the cycle, T_{ch}, (i.e., time period A to B), the rectified input voltage Vᵢₙ from the main power source, , charges transformer T. All of the switches S₁, S₂ and S₃ are in the open state, except for the power switch S₀ (see FIG. 6a). Once the transformer T is sufficiently charged, the power switch S₀ is opened at time B. In actual operation, the first switch in the switching sequence, e.g., switch S₁, is usually turned on somewhat ahead of the power switch S₀ being turned off. In general, there may often be some overlap between the 'on' and 'off' times off the sequential controlled switches. This occurs for two reasons, first, the flyback converter should not be left "unloaded", and secondly, soft-switching can sometimes be achieved by means of some overlap.

### Discharge Phase

During the discharge phase, T_{d}, of the energy cycle (i.e., time period B to E), only one of the switches S₁, S₂, S₃ is in a closed state at any given time, so that the load coupled to the closed switch S₁; S₂; S₃ will be charged by the transformer T. Each of the switches S₁, S₂, S₃ is closed for a time sufficient to perform voltage regulation of the respective output voltages V₁, V₂, V₃. Specifically, voltage regulation is performed on the secondary side utilizing the secondary controller 512 by coordinating and feeding back to the gates V_{G1}, V_{G2}, V_{G3} of the respective switches S₁, S₂, S₃ signals having a time duration corresponding to the desired the open and closed states of the switches S₁, S₂, S₃. It is noted, however, that the secondary side control is not effected for the output channel to be sequenced last in each charge/discharge cycle. The last output channel is controlled from the primary side, as will be described. It is further noted that any of the output channels could be sequenced last in the energy cycle sequencing order.

The discharge phase of the energy cycle is now described in detail.

For the time period B to C, the switch S₁ remains closed (see FIG. 6b). Initially, at time period B, there is an overshoot in the drain voltage V_{D} (see FIG. 6e) due to the leakage inductance of the transformer T. The drain voltage V_{D} eventually settles down to a level equal to the sum of the input voltage plus the reflected voltage Vᵣ₁ of the first output voltage V₁ of the channel 520. That is, the drain voltage V_{D} , equals (Vᵣ₁ + Vᵢₙ).

For the time period C to D, the switch S₂ is in a closed state (see FIG. 6c) and the switch S₁ is in an open state (see FIG. 6b). During this time, the drain voltage V_{D} is equal to the sum of the input voltage Vᵢₙ plus the reflected voltage Vᵣ₂ of the second output voltage V₂. That is, the drain voltage V_{D} equals (Vᵣ₂+ Vᵢₙ).

For the time period D to E, the switch S₃ is in a closed state (see FIG. 6d) and the switch S₂ is in an open state (see FIG. 6c). During this time, the drain voltage V_{D} is equal to the sum of the input voltage plus the reflected voltage Vᵣ₃ of the third output voltage V₃. That is, the drain voltage V_{D} equals (Vᵣ₃ + Vᵢₙ).

The point in time E marks the end of the discharge sub-phase T_{d} and the start of the resonance sub-phase Tᵣₑₛ. The significance of this demarcation will now be described.

At the point in time E, which marks the demarcation point between the two sub-phases, discharge and resonance, switch S₃ transitions from a closed to an open state. The points in time E occurs at a point in time at which the secondary-side current becomes substantially zero. One way of determining a substantially zero secondary-side current is with a monitoring circuit. The zero current condition occurs as a result of the transformer T becoming demagnetized, i.e., no stored energy is left in the transformer T for the present energy cycle. Accordingly, at point E, there is no longer a reflected voltage on the primary side. This situation causes a resonance condition (see FIG. 6e) between capacitor C₅ and the magnetizing inductance of the primary winding 514 of transformer T. The resonance condition is used to perform soft-switching of the power switch. S₀.

Soft-switching of the power switch S₀ is achieved via the primary controller 507 by detecting the resonance condition (see FIG. 6e) and determining one of the minima M1, M2 of the resonance to turn on power switch S₀. The resonance period Tᵣₑₛ ends when the power switch S₀ is turned on again. In the example shown in Fig. 6E, the power switch S₀ is turned on at the second minimum M2, being the point F in time at which one charge/discharge cycle is completed.

It is further noted that the amplitude of the resonant waveform of FIG. 6e is determined by the magnitude of the reflected voltage of the last output to be switched in the energy cycle. In the illustrative circuit, the amplitude of the waveform of FIG. 6e is determined by the reflected voltage Vᵣ₃. It is further noted that if the reflected voltage, e.g., Vᵣ₃, is large enough, the minima of the waveform can approach zero volts.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A power converter (500) comprising:
- a primary side (505) comprising:
- a power switch (S₀);
- a primary winding (514) of a power transformer (T) connected in a series combination with said power switch (S₀), the series combination connected in parallel across a first and a second input supply node;
- an input capacitor (C₄) connected in parallel across the first and second input supply nodes;
- and a switch capacitor (C₅) connected in parallel across said power switch (S₀);
- a secondary side (510) comprising:
- a secondary winding (516) of the power transformer (T) connected in parallel across a first and a second secondary side node;
- multiple output circuits (520, 540, 560) wherein each of said multiple output circuits includes a rectifier (D₁, D₂, D₃), a switch (S₁, S₂, S₃) and an output capacitor (C₁, C₂, C₃), a series connection of respectively said rectifier (D₁, D₂, D₃), said switch (S₁, S₂, S₃), and said output capacitor (C₁, C₂, C₃) being connected between the first and the second secondary side node, and an output voltage (V₁, V₂, V₃) being present across the output capacitor (C₁, C₂, C₃);
- means (512) for performing secondary-side regulation of at least one output voltage (V₁, V₂, V₃) of said multiple output circuits (520, 540, 560) via substantially sequentially turning on the switches (S₁, S₂, S₃) of the respective multiple output circuits (520, 540, 560) during a discharge phase (T_{d}), substantially immediately following a moment (B) when the power switch (S₀) is turned off;
**characterized in that** the means (512) for performing secondary side regulation are arranged for turning on the switch of a next output circuit after the output voltage of a previous output circuit is regulated, and wherein after the discharge period (T_{d}), substantially at a moment when a drain voltage (V_{D}) across the power switch (S₀) reaches a resonance minimum between a magnetizing inductance of the primary winding (514) and said switch capacitor (C₅), the power switch (S₀) is turned on by a primary side controller (507),

2. The power converter (500) of claim 1, wherein the power converter (500) comprises a monitoring circuit for determining a zero current condition at which the secondary side current becomes substantially zero, the zero current conditlon marking an end of the discharge period (T_{d}).

3. The power converter (500) of claim 1, wherein said primary side controller (507) includes a first input for receiving the drain voltage (V_{D}) to detect said resonance minimum.

4. The power converter (500) of claim 1, wherein said primary controller (507) further includes a second input for receiving a secondary side (V_{3E}) signal for controlling a duty cycle of said power switch (S₀).

5. The power converter (500) of claim 4, wherein the secondary side signal (V_{3E}) is dependent on the output voltage of a last output circuit being the output circuit of which the switch (S₁; S₂; S₃) is turned on as last in the sequence.

6. The power converter (500) of claim 1, wherein the switch in each one of the multiple output circuits enables selective disabling of at least one output circuit.

7. The power converter (500) of claim 1, wherein the power switch is selected from the group consisting of a FET device, and an insulatcd gate bipolar transistor device.

8. The power converter (500) of claim 5, wherein the means (512) for performing secondary side regulation, regulate the output voltages (V₁, V₂, V₃) except the output voltage of the last output circuit (520; 540; 560),

9. A method for regulating a power converter (500), the power converter comprising: a primary side (505) comprising:
- a power switch (S₀);
- a primary winding (514) of a power transformer (T) connected in a series combination with said power switch (S₀), the series combination connected in parallel across a first and a second input supply node;
- an input capacitor (C₄) connected in parallel across the first and second input supply nodes;
and a switch capacitor (C₅) connected in parallel across said power switch (S₀);
a secondary side (510) comprising:
- a secondary winding (516) of the power transformer (T) connected in parallel across a first and a second secondary side node;
- multiple output circuits (520, 540, 560) wherein each of said multiple output circuits includes a rectifier (D₁, D₂, D₃), a switch (S₁, S₂, S₃) and an output capacitor (C₁, C₂, C₃), a series connection of respectively said rectifier (D₁, D₂, D₃), said switch (S₁, S₂, S₃), and said output capacitor (C₁, C₂, C₃) being connected between the first and the second secondary side node, and an output voltage (V₁, V₂, V₃) being present across the output capacitor (C₁, C₂, C₃);
the method comprises performing (512) secondary-side regulation of at least one output voltage (V₁, V₂, V₃) of said multiple output circuits (520, 540, 560) via substantially sequentially turning on the switches (S₁, S₂, S₃) of the respective multiple output circuits (520, 540, 560) during a discharge phase (Td), substantially immediately following a moment (B) when the power switch (S₀) is turned off;
**characterized in that** the method further comprises:
turning on the switch of a next output circuit after the output voltage of a previous output circuit is regulated, and
turning on the power switch (S₀) after the discharge period (Td) substantially at a moment when a drain voltage (V_{D}) across the power switch (S₀) reaches a resonance minimum between a magnetizing inductance of the primary winding (514) and said switch capacitor (C₅).

## Patentansprüche

1. Spannungsumformer (500), der die nachfolgenden Elemente umfasst:
- eine Primärseite (505), die Folgendes aufweist:
-- einen Netzschalter (S₀),
-- eine Primärwicklung (514) eines Netztransformators (T), die in Reihe mit dem genannten Netzschalter (S₀) verbunden ist, wobei die Reihenschaltung zu einem ersten und einem zweiten Eingangsspeiseknotenpunkt parallel geschaltet ist,
-- einen Eingangskondensator (C₄), der zu dem ersten und dem zweiten Eingangsknotenpunkt parallel geschaltet ist; und
-- einen Schaltkondensator (C₅), der zu dem Netzschalter (S₀) parallel geschaltet ist,
- eine Sekundärseite (510), die Folgendes umfasst:
-- eine Sekundärwicklung (516) des Netztransformators (T), die zu einem ersten und einem zweiten Seitenknotenpunkt parallel geschaltet ist,
- mehrere Ausgangsschaltungen (520, 540, 560), wobei jede der genannten vielen Ausgangsschaltungen einen Gleichrichter (D₁, D₂, D₃) enthalten, einen Schalter (S₁, S₂, S₃) und einen Ausgangskondensator (C₁, C₂, C₃), eine Reihenschaltung aus dem genannten Gleichrichter (D₁, D₂, D₃), dem genannten Schalter (S₁, S₂, S₃), und wobei der genannte Ausgangskondensator (C₁, C₂, C₃) zwischen dem ersten und dem zweiten sekundären Seitenknotenpunkt verbunden ist und wobei an dem Ausgangskondensator (C₁, C₂, C₃) eine Ausgangsspannung (V₁, V₂, V₃) vorhanden ist,
- Mittel (512) zum Durchführen einer Sekundärseiten-Regelung wenigstens einer Ausgangsspannung (V₁, V₂, V₃) der genannten vielen Ausgangsschaltungen (520, 540, 560) über im Wesentlichen sequentielles Edinschalten der Schalter (S₁, S₂, S₃) der betreffenden vielen Ausgangsschaltungen (520, 540, 560) während einer Entladungsphase (T_{d}), im Wesentlichen unmittelbar nach einem Zeitpunkt (B) wenn der Netzschalter (S₀) abgeschaltet wird;
**dadurch gekennzeichnet, dass** die Mittel (512) zum Durchführen der Sekundärseitenregelung dazu vorgesehen sind, den Schalter einer nächsten Ausgangsschaltung einzuschalten, nachdem die Ausgangsspannung einer vorhergehenden Ausgangsschaltung geregelt worden ist, und wobei nach der Entladungsperiode (T_{d}) im Wesentlichen zu einem Zeitpunkt, wo eine Drain-Spannung (V_{D}) an dem Netzschalter (S₀) ein Resonanzminimum erreicht zwischen einer magnetisierenden Induktivität der Primärwicklung (514) und dem genannten Kondensator (C₅), der Netzschalter (S₀) durch einen Primärseitencontroller (507) eingeschaltet wird.

2. Spannungsumformer (500) nach Anspruch 1, wobei der Spannungsumformer (500) eine Überwachungsschaltung aufweist zum Ermitteln eines Null-Stromzustandes, wobei der Sekundärseitenstrom im Wesentlichen Null wird, wobei der Null-Stromzustand ein Ende der Entladungsperiode (T_{d}) markiert.

3. Spannungsumformer (500) nach Anspruch 1, wobei der genannte Primärseitencontroller (507) einen ersten Eingang aufweist zum Empfangen der Drain-Spannung (V_{D}) zum Detektieren des genannten Resonanzminimums.

4. Spannungsumformer (500) nach Anspruch 1, wobei der genannte Primärcontroller (507) einen zweiten Eingang aufweist zum Empfangen eines Sekundärseitensignals (V3E) zur Steuerung eines Arbeitszyklus des genannten Netzschalters (S₀).

5. Spannungswandler (500) nach Anspruch 4, wobei das Sekundärseitensignal (V3E) von der Ausgangsspannung einer letzten Ausgangsschaltung abhängig ist, wobei diese Ausgangsschaltung die Ausgangsschaltung ist, deren Schalter (S₁, S₂, S₃) als letzter in der Folge eingeschaltet wird.

6. Spannungswandler (500) nach Anspruch 1, wobei der Schalter in jeder der vielen Ausgangsschaltungen eine selektive Sperrung wenigstens einer Ausgangschaltung ermöglicht.

7. Spannungswandler (500) nach Anspruch 1, wobei der Netzschalter aus der Gruppe selektiert wird, die aus einer FET-Anordnung und einer bipolaren Transistoranordnung mit einer isolierten Gate-Elektrode besteht.

8. Spannungswandler (500) nach Anspruch 5, wobei die Mittel (512) zum Durchführen der Sekundärseitenregelung, die Ausgangsspannungen (V₁, V₂, V₃) regeln, ausgenommen die Ausgangsspannung der letzten Ausgangsschaltung (520, 540, 560).

9. Verfahren zur Regelung eines Spannungswandlers (500), wobei der Spannungswandler Folgendes umfasst:
- einen Netzschalter (S₀),
- eine Primärwicklung (514) eines Netztransformators (T), die in Reihe mit dem genannten Netzschalter (S₀) verbunden ist, wobei die Reihenschaltung zu einem ersten und einem zweiten Eingangsspeiseknotenpunkt parallel geschaltet ist,
-- einen Eingangskondensator (C₄), der zu dem ersten und dem zweiten Eingangsknotenpunkt parallel geschaltet ist; und
-- einen Schaltkondensator (C₅), der zu dem Netzschalter (S₀) parallel geschaltet ist,
- eine Sekundärseite (510), die Folgendes umfasst:
-- eine Sekundärwicklung (516) des Netztransformators (T), die zu einem ersten und einem zweiten Seitenknotenpunkt parallel geschaltet ist,
- mehrere Ausgangsschaltungen (520, 540, 560), wobei jede der genannten vielen Ausgangsschaltungen einen Gleichrichter (D₁, D₂, D₃) enthalten, einen Schalter (S₁, S₂, S₃) und einen Ausgangskondensator (C₁, C₂, C₃), eine Reihenschaltung aus dem genannten Gleichrichter (D₁, D₂, D₃), dem genannten Schalter (S₁, S₂, S₃), und wobei der genannte Ausgangskondensator (C₁, C₂, C₃) zwischen dem ersten und dem zweiten sekundären Seitenknotenpunkt verbunden ist und wobei an dem Ausgangskondensator (C₁, C₂, C₃) eine Ausgangsspannung (V₁, V₂, V₃) vorhanden ist,
wobei das Verfahren Folgendes umfasst: das Durchführen (512) einer Sekundärseitenregelung wenigstens einer Ausgangsspannung (V₁, V₂, V₃) der genannten vielen Ausgangsschaltungen (520, 540, 560) über im Wesentlichen sequentielles Einschalten der Schalter (S₁, S₂, S₃) der betreffenden vielen Ausgangsschaltungen (520, 540, 560) während einer Entladungsphase (T_{d}), im Wesentlichen unmittelbar nach einem Zeitpunkt (B), wo der Netzschalter (S₀) abgeschaltet wird,
**dadurch gekennzeichnet, dass** das Verfahren weiterhin Folgendes umfasst:
- das Einschalten des Schalters einer nächsten Ausgangsschaltung, nachdem die Ausgangsspannung einer vorhergehenden Ausgangsschaltung geregelt worden ist, und
- das Einschalten des Netzschalters (S₀) nach der Entladungsperiode (T_{d}) im Wesentlichen zu einem Zeitpunkt, wo eine Drain-Spannung (V_{D}) an dem Netzschalter (S₀) ein Resonanzminimum zwischen einer magnetischen Induktivität der Primärwicklung (514) un dem genannten Schalterkondensator (C₅) erreicht.

## Revendications

1. Convertisseur de puissance (500) comprenant :
- un côté primaire (505) comprenant :
- un commutateur de puissance (S₀) ;
- un enroulement primaire (514) d'un transformateur de puissance (T) connecté dans une combinaison en série avec ledit commutateur de puissance (S₀), la combinaison en série raccordée en parallèle par des premier et deuxième noeuds d'alimentation d'entrée ;
- un condensateur d'entrée (C₄) raccordé en parallèle par des premier et deuxième noeuds d'alimentation d'entrée ;
- et un condensateur de commutation (C₅) raccordé en parallèle par l'intermédiaire dudit commutateur de puissance (S₀) ;
- un côté secondaire (510) comprenant :
- un enroulement secondaire (516) du transformateur de puissance (T) raccordé en parallèle par l'intermédiaire des premier et deuxième noeuds côté secondaire ;
- des circuits à sorties multiples (520, 540, 560) dans lesquels chacun desdits circuits à sortie multiple comprend un rectificateur (D₁, D₂, D₃), un commutateur (S₁, S₂, S₃), et un condensateur de sortie (C₁, C₂, C₃), un raccordement en série, respectivement, dudit rectificateur (D₁, D₂, D₃), dudit commutateur (S₁, S₂, S₃) et dudit condensateur de sortie (C₁, C₂, C₃) étant raccordés entre les premier et deuxième noeuds côté secondaire et une tension de sortie (V₁, V₂, V₃) étant présente au-travers du condensateur de sortie (C₁, C₂, C₃) ;
- des moyens (512) pour effectuer une régulation d'au moins une tension de sortie (V₁, V₂, V₃) desdits circuits à sorties multiples (520, 540, 560) en activant de manière essentiellement séquentielle les commutateurs (S₁, S₂, S₃) des circuits respectifs à sortie multiple (520, 540, 560) pendant une phase de décharge (T_{d}) en suivant en substance immédiatement un moment (B) lorsque le commutateur de puissance (S₀) est désactivé ; **caractérisé en ce que** les moyens (512) pour effectuer une régulation côté secondaire sont disposés pour activer le commutateur d'un circuit de sortie suivant après que la tension de sortie d'un circuit de sortie précédent est régulée et dans lequel, après la période de décharge (T_{d}), en substance à un moment auquel une tension de drain (V_{D}) au-travers du commutateur de puissance (S₀) atteint un minimum de résonance entre une inductance de magnétisation de l'enroulement primaire (514) et ledit condensateur de commutation (C₅), le commutateur de puissance (S₀) étant activé par une commande côté primaire (507).

2. Convertisseur de puissance (500) de la revendication 1 dans lequel le convertisseur de puissance (500) comprend un circuit de contrôle pour déterminer une condition de courant zéro à laquelle le courant côté secondaire devient essentiellement égal à zéro, la condition de courant zéro marquant la fin de la période de décharge (T_{d}).

3. Convertisseur de puissance (500) de la revendication 1, dans lequel ladite commande côté primaire (507) comprend une première entrée pour recevoir la tension de drain (V_{D}) pour détecter ledit minimum de résonance.

4. Convertisseur de puissance (500) de la revendication 1, dans lequel ladite commande primaire (507) comprend par ailleurs une deuxième entrée pour recevoir un signal côté secondaire (V_{3E}) pour commander un cycle de charge dudit commutateur de puissance (S₀).

5. Convertisseur de puissance (500) de la revendication 4, dans lequel ledit signal côté secondaire (V_{3E}) dépend de la tension de sortie d'un dernier circuit de sortie, à savoir le circuit de sortie dont le commutateur (S₁, S₂, S₃) est activé en dernier lieu dans la séquence.

6. Convertisseur de puissance (500) de la revendication 1, dans lequel le commutateur dans chacun des circuits à sortie multiple permet la désactivation sélective d'au moins un circuit de sortie.

7. Convertisseur de puissance (500) de la revendication 1, dans lequel la commutation de puissance est choisie à partir du groupe composé d'un dispositif FET et un dispositif à transistor bipolaire à grille isolée.

8. Convertisseur de puissance (500) selon la revendication 5, dans lequel les moyens (512) pour effectuer une régulation côté secondaire régule les tensions de sortie (V₁, V₂, V₃), hormis la tension de sortie du dernier circuit de sortie (520 ; 540 ; 560).

9. Procédé de régulation d'un convertisseur de puissance (500), le convertisseur de puissance comprenant un côté primaire comprenant :
- un commutateur de puissance (S₀) ;
- un enroulement primaire (514) d'un transformateur de puissance (T) connecté dans une combinaison en série avec ledit commutateur de puissance (S₀), la combinaison en série raccordée en parallèle par des premier et deuxième noeuds d'alimentation d'entrée ;
- un condensateur d'entrée (C₄) raccordé en parallèle par les premier et deuxième noeuds d'alimentation d'entrée ;
- et un condensateur de commutation (C₅) raccordé en parallèle par ledit commutateur de puissance (S₀) ;
Un côté secondaire (510) comprenant :
- un enroulement secondaire (516) du transformateur de puissance (T) raccordé en parallèle par lesdits premier et deuxième noeuds côté secondaire ;
- des circuits à sorties multiples (520, 540, 560) dans lesquels chacun desdits circuits à sorties multiples comprend un rectificateur (D₁, D₂, D₃), un commutateur (S₁, S₂, S₃) et un condensateur de sortie (C₁, C₂, C₃), un raccordement en série dudit rectificateur (D₁, D₂, D₃), dudit commutateur (S₁, S₂, S₃) et dudit condensateur de sortie (C₁, C₂, C₃) étant assuré entre les premier et deuxième noeuds côté secondaire et une tension de sortie (V₁, V₂, V₃) étant présente au travers du condensateur de sortie (C₁, C₂, C₃) ;
le procédé comprenant l'exécution (512) d'une régulation côté secondaire d'au moins une tension de sortie (V₁, V₂, V₃) desdits circuits à sorties multiples (520, 540, 560) pendant une phase de décharge (T_{d}), suivant en substance immédiatement un moment (B) auquel le commutateur de puissance (S₀) est désactivé ;
**caractérisé en ce que** le procédé comprend par ailleurs :
l'activation du commutateur d'un circuit de sortie suivant après que la tension de sortie d'un circuit de sortie précédent a été régulé et
l'activation du commutateur de puissance (S₀) après la période de décharge (T_{d}) essentiellement à un moment auquel une tension de drain (V_{D}) au travers du commutateur de puissance (S₀) atteint un minimum de résonance entre une inductance de magnétisation de l'enroulement primaire (514) et dudit condensateur de commutation (C₅).
